# EUROPÄISCHE PATENTSCHRIFT

(11) **EP 1 446 639 B1**
(45) Veröffentlichungstag und Bekanntmachung des Hinweises auf die Patenterteilung: **22.04.2015**
(21) Anmeldenummer: 02790344.2
(22) Anmeldetag: 08.11.2002
(51) Int. Cl.: G01D 3/02, G01D 18/00

(54) **VORRICHTUNG ZUR MESSUNG UND/ODER ÜBERWACHUNG EINER PHYSIKALISCHEN ODER CHEMISCHEN PROZESSGRÖSSE**
DEVICE FOR MEASURING AND/OR MONITORING A PHYSICAL OR CHEMICAL PROCESS VARIABLE
DISPOSITIF DE MESURE ET/OU DE SURVEILLANCE D'UNE GRANDEUR DE PROCESSUS PHYSIQUE OU CHIMIQUE

(30) Priorität: 21.11.2001 DE 10156907
(43) Veröffentlichungstag der Anmeldung: 18.08.2004
(73) Patentinhaber: Endress + Hauser GmbH + Co. KG, 79689 Maulburg (DE)
(72) Erfinder: SPANKE, Dietmar, 79585 Steinen (DE); VON STEIN, Bert, 79183 Waldkirch (DE); KILIAN, Markus, 79100 Freiburg (DE); ALBERS, Stefan, 79689 Maulburg (DE)
(74) Vertreter: Andres, Angelika Maria
(86) Internationale Anmeldenummer: PCT/EP2002/012470
(87) Internationale Veröffentlichungsnummer: WO 2003/044467

(56) Entgegenhaltungen:
- DE-A- 4 340 027
- GB-A- 2 284 059
- US-A- 5 375 073
- PATENT ABSTRACTS OF JAPAN vol. 1998, no. 09, 31. Juli 1998 (1998-07-31) & JP 10 086700 A (YAZAKI CORP), 7. April 1998 (1998-04-07)
- BEAUDOUIN F ET AL: "LES CAPTEURS INTELLIGENTS: LE CONCEPT ET LES ENJEUX" REVUE GENERALE DE L'ELECTRICITE, RGE. PARIS, FR, Nr. 3, 1. März 1993 (1993-03-01), Seiten 1-8, XP000349401 ISSN: 0035-3116

## Beschreibung

Die Erfindung bezieht sich auf eine Vorrichtung zur Messung und/oder Überwachung einer physikalischen oder chemischen Prozeßgröße.

Zur Bestimmung einer physikalischen oder chemischen Meßgröße werden die unterschiedlichsten Typen von Sensoren eingesetzt, denen zum Teil sehr unterschiedliche physikalische Meßprinzipien zugrunde liegen. So wird beispielsweise der Füllstand eines Füllguts in einem Behälter über die Laufzeit von Ultraschallwellen oder von elektromagnetischen Wellen, insbesondere von Mikrowellen ermittelt, die an der Oberfläche des Füllguts reflektiert werden. Beim Einsatz von Mikrowellen werden diese entweder frei in den Behälter in Richtung der Oberfläche des Füllguts abgestrahlt, oder die Mikrowellen werden entlang eines leitfähigen Elements in den Behälter hineingeführt. Darüber hinaus werden kapazitive und radiometrische Meßverfahren zur Füllstandsmessung herangezogen.

Zur Grenzstandsdetektion wird bevorzugt die Resonanzfrequenz eines Schwingstabes oder eines schwingfähigen Gebildes, das aus mehreren Schwingstäben besteht, ausgewertet. Bei dieser Meßmethode wird der Effekt ausgenutzt, daß die Resonanzfrequenz eine andere ist, je nachdem ob die Schwingstäbe ihre Schwingungen frei oder in Kontakt mit dem Füllgut ausführen.

Als weitere physikalische oder chemische Meßgrößen sind z. B. der Druck, der Durchfluß, die Dichte, der pH-Wert eines Mediums oder auch die Trübung und der Sauerstoff- oder Nitratgehalt in einem Medium zu nennen. Meßgeräte zur Messung/Überwachung einer Vielzahl von unterschiedlichen Prozeßgrößen werden von der Firma Endress+Hauser angeboten und vertrieben.

Bei der Inbetriebnahme eines Meßgeräts, das in der industriellen Prozeß- und Regeltechnik eingesetzt wird, wird der Benutzer des Geräts üblicherweise über einen Startbildschirm begrüßt. Besitzt das Gerät kein integriertes Display, so wird der Startbildschirm auf einem separaten Display aktiviert, sobald das separate Display mit dem Meßgerät verbunden wird. Dieser Startbildschirm bzw. diese Begrüßungsseite ist bei den aus dem Stand der Technik bekannt gewordenen Lösungen fest vorgegeben. Möchte der Benutzer einen individuell gestalteten Startbildschirm haben, so war es bislang erforderlich, eine entsprechend adaptierte Software zu generieren.

Das gleiche Problem tritt übrigens auf, wenn die Meßgeräte eines Herstellers für eine andere Firma als OEM-Produkte gelabelt werden; auch hier ist bislang lediglich bekannt geworden, die Meßgeräte mit einer entsprechend angepaßten Software auszustatten.

Diese bekannte Lösung ist in vielfacher Weise nachteilig: Abgesehen von dem relativ hohen Fertigungsaufwand ist auch eine erhöhte Lagerkapazität notwendig. Desweiteren werden erhöhte Anforderungen an die Ersatzteillogistik gestellt.

Der Erfindung liegt die Aufgabe zugrunde, eine bedienerfreundliche, kostengünstige Vorrichtung zum Messen und/oder Überwachen einer Prozeßgröße bereitzustellen.

Die Aufgabe wird durch eine Vorrichtung gemäß Anspruch 1 gelöst.

Vorteilhafte Weiterbildungen der erfindungsgemäßen Vorrichtung sind in den abhängigen Ansprüchen 2-11 definiert. Beispielsweise erscheint auf der Programmseite neben dem Gerätenamen das Logo des Herstellers und/oder des Benutzers. Weiterhin kann es sich bei der Programmseite um eine Programmseite handeln, die Information über die zu messende und/oder die zu überwachende Prozeß-größe bereitstellt. So kann in beliebigen oder allgemein verständlichen Symbolen angezeigt werden, um welches Medium es sich handelt, das in dem Behälter gemessen bzw. überwacht wird. Es kann eine gewünschte, gegebenenfalls individuell gestaltete Programmseite angezeigt werden, sobald ein vorgegebener Meßwert erreicht ist oder sobald eine Fehlfunktion an dem Meßgerät aufgetreten ist, die in einer Speichereinheit z. B. als, Last Error' abgelegt wird. Letztere Information gibt einem Sevicetechniker beim Überprüfen des Geräts sofort den Hinweis, welcher Fehler an dem Gerät als letzter aufgetreten ist.

Wie bereits gesagt, wird die vorrichtungs-, prozeß- oder firmenspezifischen Information in allgemein verständlichen Symbole bereitgestellt. Bei der firmenspezifischen Information handelt es sich bevorzugt um Firmenlogos. Bei der prozeßspezifischen Information handelt es sich -allgemein gesprochen - um Symbole, die das Prozeßmedium, den Prozeßzustand und/oder die Meß-und/oder Überwachungsvorrichtung selbst charakterisieren.

Damit der Benutzer sich seine eigenen Programmseiten individuell gestalten kann, ist der Anzeige-, Eingabe- und/oder Ausgabeeinheit ein Programm zugeordnet. Über dieses Programm kann der Benutzer ein gewünschtes Symbol frei konfigurieren.

Eine alternative Ausgestaltung zum freien Konfigurieren der Symbole sieht vor, daß dem Benutzer des Meß- und/oder Überwachungsgeräts über ein Netzwerk oder über einen Datenträger unterschiedliche Symbole zu Verfügung gestellt werden, die in die Speichereinheit einschreibbar sind und die nachfolgend auf der vorgesehenen Programmseite automatisch erscheinen.

Dem Meßgerät können auch mehrere Speichereinheiten zugeordnet sind, wobei in unterschiedlichen Speichereinheiten unterschiedliche Symbole fest eingeschrieben sind; weiterhin sind Mittel vorgesehen, über die der Benutzer des Meß- und/oder Überwachungsgeräts zumindest ein gewünschtes Symbol, welches nachfolgend auf einer ausgewählten Programmseite angezeigt wird, auswählen kann. Im einfachsten Fall handelt es sich bei dem Mittel um einen Schalter oder eine Taste, über den/über die das gewünschte Symbol aufgerufen wird.

Die zumindest eine Speichereinheit ist übrigens entweder dem Meß- und/oder Überwachungsgerät oder der Anzeige-, Eingabe- und/oder Ausgabeeinheit zugeordnet.

Bei der Anzeige-/Eingabe-/Ausgabeeinheit handelt es sich beispielsweise um einen PC, einen Laptop, einen PDA, eine Eingabetastatur und/oder ein Display. Wie bereits an vorhergehender Stelle erwähnt, kann es sich bei der Anzeige-, Eingabe- und/oder Ausgabeeinheit entweder um eine integrale Einheit oder um Einzelkomponenten handeln. Erwähnt sei ein Display, das auf das Meßgerät aufgesteckt wird, wobei die Verbindung über eine Kommunikationsschnittstelle geschaffen wird.

Die Erfindung wird anhand der nachfolgenden Zeichnungen näher erläutert. Es zeigt:
Fig. 1: eine erste Ausgestaltung der erfindungsgemäßen Vorrichtung,
Fig. 2: eine zweite Ausgestaltung der erfindungsgemäßen Vorrichtung,
Fig. 3: ein Flußdiagramm zur Verwendung in der erfindungsgemäßen Vorrichtung und
Fig. 4: Die schematische Darstellung einer Programmseite.

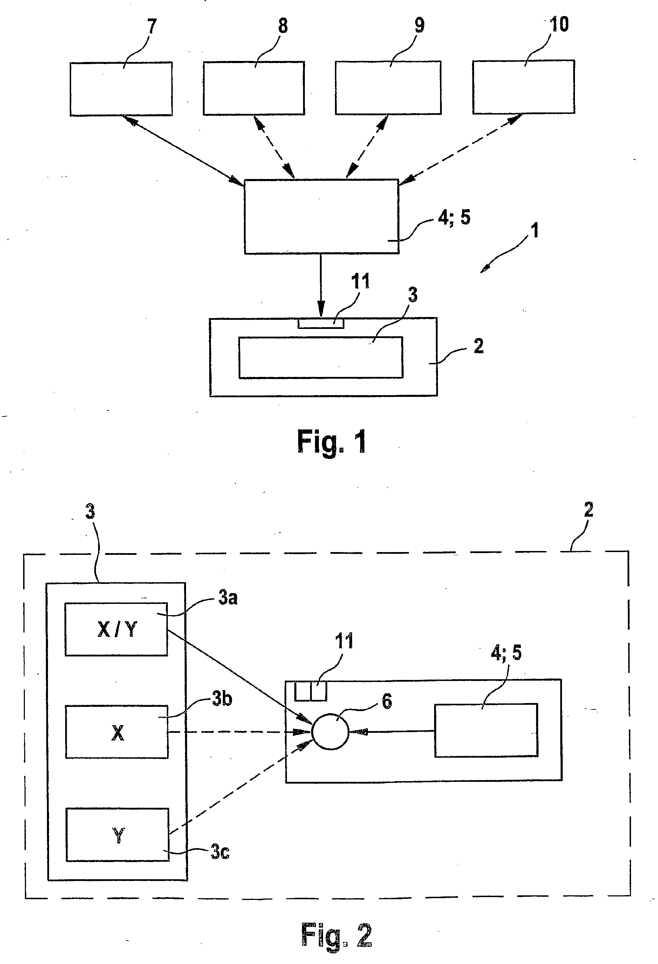

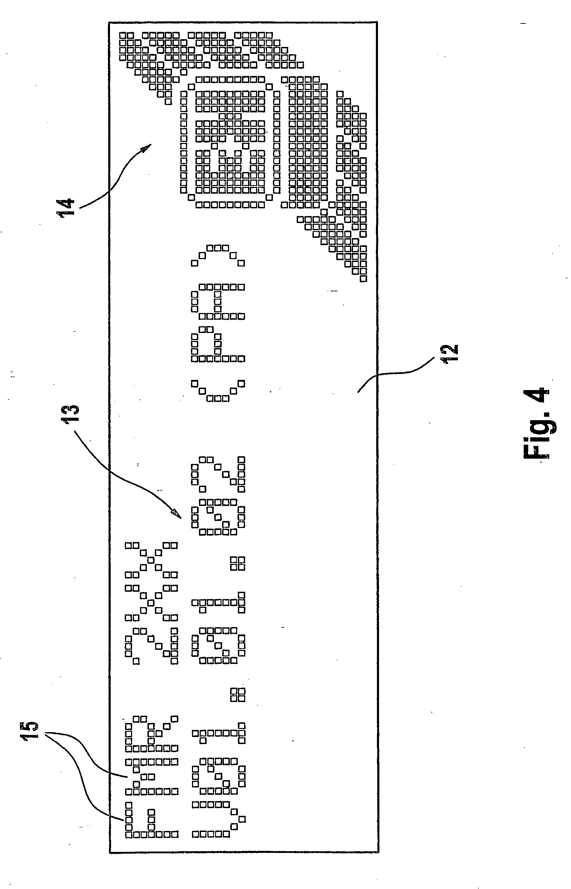

Fig. 1 zeigt eine erste Ausgestaltung der erfindungsgemäßen Vorrichtung 1. Die Anzeige-/Eingabe- und/oder Ausgabeeinheit 4; 5 ist über eine Datenschnittstelle 11 mit dem Meß- und/oder Überwachungsgerät 2 verbunden. Dem Meß- und/oder Überwachungsgerät 2 ist eine Speichereinheit 3 zugeordnet, in die firmen-, vorrichtungs- und/oder prozeßspezifische Information 13 einschreibbar ist. Bei der Speichereinheit 3 handelt es sich um einen nicht flüchtigen Speicher, d.h. die eingeschriebene Information 13 ist ständig in der Speichereinheit 3 verfügbar. Die in die Speichereinheit 3 einzuschreibende Information 13 wird im gezeigten Fall über ein Zeichenprogramm 7 erstellt. So hat ein Benutzer des Meß- und/oder Überwachungsgeräts 2 die Möglichkeit, sich eine gewünschte Programmseite 12 selbst zu generieren. Eine derartige Programmseite 12 ist beispielhaft in Fig. 4 dargestellt. Bei den Symbolen 15 handelt es sich hier um Schriftzeichen und um ein Firmenlogo 14. Erfindungsgemäß erscheint diese Programmseite 12, sobald ein gewisses Ereignis eintritt. Beispielsweise erscheint die generierte Programmseite 12 bei Inbetriebnahme des Meß- und/oder Überwachungsgeräts 2. Bei der Programmseite 12 handelt es sich in diesem Fall um den sog. Startbildschirm bzw. um die Begrüßungsseite. Wie bereits an vorhergehender Stelle beschrieben, können jedoch auch auftretende Fehlerzustände an dem Meß- und/oder Überwachungsgerät 2 oder das Erreichen vorgegebener Meßwerte Auslöser für das Aufrufen der generierten Programmseite 12 sein.

In der Fig. 1 ist schematisch angedeutet, daß die in die Speichereinheit 3 eingeschriebene Information 13 auch über einen Datenlogger 8, ein Netzwerk 9, beispielsweise das Internet, oder ein zweites Meßgerät 10 bezogen werden kann.

Die Anzeige-/Eingabe- und/oder Ausgabeeinheit 4; 5 kann sowohl Teil des Meß-und/oder Überwachungsgeräts 2 sein; es kann sich bei der Einheit 4; 5 jedoch auch ebenso um separate Teilkomponenten handeln. Die Speichereinheit 3 kann entweder direkt in das Meß- und/oder Überwachungsgerät 2 integriert sein, oder-bei getrennten Komponenten- kann die Speichereinheit 3 ebenso Teil der Anzeige-/Eingabe- und/oder Ausgabeeinheit 4; 5 sein.

In Fig. 2 ist eine zweite Ausgestaltung der erfindungsgemäßen Vorrichtung 1 zu sehen. Bei dem Meß- und/oder Überwachungsgerät 2 handelt es sich um ein Kompaktgerät mit integrierter Anzeige-/Eingabe- und/oder Ausgabeeinheit 4; 5. Die Speichereinheit 3 besteht aus mehreren - im gezeigten Fall aus drei-separaten Speichern 3a, 3b, 3c in denen unterschiedliche firmen-, vorrichtungs-und/oder prozeß-spezifische Information 13 fest eingeschrieben ist. Im gezeigten Fall handelt es sich bei der firmen-, vorrichtungs- und/oder prozeßspezifische Information um verschiedene Firmenlogos 14. Über den Schalter 6 hat ein Benutzer (oder der Anbieter/Vertreiber) die Möglichkeit, aus den vorgegebenen Firmenlogos 14 das Logo zu aktivieren, das auf der entsprechenden Programmseite 12, beispielsweise der Start- oder Begrüßungsseite angezeigt werden soll.

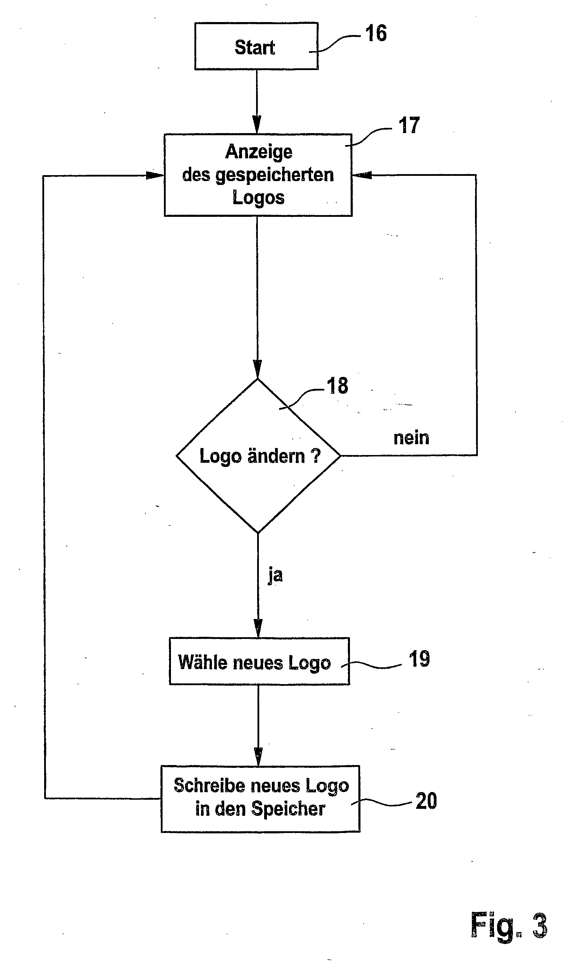

Fig. 3 zeigt ein Flußdiagramm zur Verwendung in der erfindungsgemäßen Vorrichtung 1. Das Programm wird bei Punkt 16 gestartet. Startpunkt ist beispielsweise die Inbetriebnahme des Meß- und/oder Überwachungsgeräts 2. Unter dem Programmpunkt 17 kommt das in der Speichereinheit 3 gespeicherte Firmenlogo 14 zur Anzeige. Unter Punkt 18 kann der Benutzer entscheiden, ob das gespeicherte Firmenlogo 14 geändert werden soll oder nicht. Möchte der Benutzer das gespeicherte Firmenlogo 14 behalten, so wird dieses auch bei zukünftigen Inbetriebnahmen des Meß- und/oder Überwachungsgeräts 2 auf dem Startbildschirm bzw. auf der Begrüßungsseite angezeigt. Möchte der Benutzer das gespeicherte Firmenlogo 14 ändern, so wählt er unter Programmpunkt 19 das gewünschte Firmenlogo 14 aus. Das gewünschte Firmenlogo 14 kann, wie bereits zuvor beschrieben, auf vielfältige Art und Weise generiert oder zur Verfügung gestellt werden. Das ausgewählte Firmenlogo 14 wird bei 20 in die Speichereinheit 3 eingeschrieben und erscheint in Zukunft auf dem Startbildschirm bzw. auf der Begrüßungsseite.

## Patentansprüche

1. Vorrichtung zur Messung und/oder Überwachung einer physikalischen oder chemischen Prozeßgröße mit einem Meß- und/oder Überwachungsgerät (2), zumindest einer Speichereinheit (3) und einer Anzeigeeinheit (4) und/oder Eingabe- und/oder Ausgabeeinheit (5),
wobei es sich bei der zumindest einen Speichereinheit (3) um einen nicht flüchtigen, beschreibbaren Speicher handelt,
wobei in der zumindest einen Speichereinheit (3) firmen-, vorrichtungs- und/oder prozeßspezifische Information (13) abgelegt ist,
wobei es sich bei der vorrichtungs-, prozeß- oder firmenspezifischen Information (13) um allgemein verständliche Symbole (15) handelt,
**dadurch gekennzeichnet,**
**dass** Mittel vorgesehen sind, über die der Benutzer des Meß- und/oder Überwachungsgeräts (2) zumindest ein gewünschtes Symbol (15) auswählt, welches nachfolgend auf einer ausgewählten Programmseite (12) angezeigt wird, dass die gewünschte Information (13) über die Anzeigeeinheit (4) und/oder über die Eingabe-/Ausgabeeinheit (5) auf zumindest einer Programmseite (12) aufrufbar und/oder automatisch in Abhängigkeit von einem definierten Zustand des Meß- und/oder Überwachungsgeräts (2) auf zumindest einer Programmseite (12) anzeigbar ist und
**dass** die Programmseite (12) als Start- bzw. die Begrüßungsseite, die bei Inbetriebnahme des Meß- und/oder Überwachungsgeräts (2) gestartet wird, und/oder die Programmseite (12) bei auftretenden Fehlerzuständen des Meß und/oder Überwachungsgerät (2) oder beim Erreichen vorgegebener Meßwerte,
die gewünschte Information (13) über die zu messende und/oder die zu überwachende Prozeßgröße, auf der Anzeigeeinheit (4) und/oder Eingabe- und/oder Ausgabeeinheit (5) anzeigt.

2. Vorrichtung nach Anspruch 1,
wobei es sich bei der firmenspezifischen Information um Firmenlogos (14) handelt.

3. Vorrichtung nach Anspruch 1,
wobei es sich bei der prozeßspezifischen Information (13) um Symbole (15) handelt, die das Prozeßmedium, den Prozeßzustand und/oder die Meß- und/oder Überwachungsvorrichtung (2) selbst charakterisieren.

4. Vorrichtung nach Anspruch 1,
wobei eine Kommunikations- bzw. Datenschnittstelle (11) vorgesehen ist, über die die Anzeige-Eingabe-/Ausgabeeinheit (4; 5) mit dem Meß- und/oder Überwachungsgerät (2) kommuniziert.

5. Vorrichtung nach Anspruch 1,
wobei der Anzeige-, Eingabe- und/oder Ausgabeeinheit (4; 5) ein Programm (7) zugeordnet ist, mit dem ein Benutzer des Meß- und/oder Überwachungs-geräts (2) ein gewünschtes Symbol (15) frei konfigurieren kann.

6. Vorrichtung nach Anspruch 1,
wobei dem Betreiber des Meß- und/oder Überwachungsgeräts (2) über ein Netzwerk (9) oder über Datenträger unterschiedliche Symbole zu Verfügung gestellt werden, die in die Speichereinheit (3) einschreibbar sind.

7. Vorrichtung nach Anspruch 1,
wobei in unterschiedlichen Speichereinheiten (3a, 3b, 3c) unterschiedliche Symbole (15; 14) fest eingeschrieben sind und
wobei Mittel (6) vorgesehen sind, über die der Betreiber des Meß- und/oder Überwachungsgeräts (2) zumindest ein gewünschtes Symbol (15), welches nachfolgend auf einer ausgewählten Programmseite (12) angezeigt wird, auswählen kann.

8. Vorrichtung nach einem oder mehreren der vorhergehenden Ansprüche, wobei die zumindest eine Speichereinheit (3) entweder dem Meß- und/oder Überwachungsgerät (2) oder der Anzeige-, Eingabe- und/oder Ausgabeeinheit (4; 5) zugeordnet ist.

9. Vorrichtung nach Anspruch 1 oder 7,
wobei es sich bei der Anzeige-/Eingabe-/Ausgabeeinheit (4; 5) um einen PC, einen Laptop, einen PDA, eine Eingabetastatur und/oder ein Display handelt.

10. Vorrichtung nach Anspruch 1,
wobei es sich bei der Anzeige-, Eingabe- und/oder Ausgabeeinheit (4; 5) entweder um eine integrale Einheit oder um Einzelkomponenten handelt.

11. Vorrichtung nach Anspruch 1,
wobei es sich bei der firmen-, vorrichtungs- und/oder prozeßspezifischen Information (13) um eine akustische Tonfolge mit zumindest einem Ton oder um eine Audioaufzeichnung handelt.

## Claims

1. Apparatus designed to measure and/or monitor a physical or chemical process variable with a measuring and/or monitoring device (2), at least one memory unit (3) and a display unit (4) and/or an input and/or output unit (5),
wherein the at least one memory unit (3) is a non-volatile, writable memory, wherein company-specific, apparatus-specific and/or process-specific information (13) is saved in the at least one memory unit (3),
wherein the apparatus-specific, process-specific or company-specific information (13) constitutes generally comprehensible symbols (15),
**characterized in that**
resources are provided via which the user of the measuring and/or monitoring device (2) selects at least one desired symbol (15) which is subsequently displayed on a selected program page (12),
**in that** the desired information (13) can be called up via the display unit (4) and/or via the input/output unit (5) on at least one program page (12) and/or can be displayed automatically on at least one program page (12) depending on a defined state of the measuring and/or monitoring device (2), and
**in that** the program page (12) is designed as the start page or welcome page that is started when the measuring and/or monitoring device (2) is put into operation, and/or if error conditions for the measuring and/or monitoring device (2) occur, or if prespecified measuring values are reached, the program page (12) displays the desired information (13) about the process variable to be measured and/or to be monitored on the display unit (4) and/or input and/or output unit (5).

2. Apparatus as claimed in Claim 1,
wherein the company-specific information constitutes company logos (14).

3. Apparatus as claimed in Claim 1,
wherein the process-specific information (13) constitutes symbols (15) that characterize the process medium, the process condition and/or the measuring and/or monitoring apparatus (2) itself.

4. Apparatus as claimed in Claim 1,
wherein a communication or data interface (11) is provided via which the display/input/output unit (4, 5) communicates with the measuring device and/or monitoring device (2).

5. Apparatus as claimed in Claim 1,
wherein a program (7) is assigned to the display, input and/or output unit (4, 5), said program allowing a user of the measuring and/or monitoring device (2) to configure a desired symbol as required.

6. Apparatus as claimed in Claim 1,
wherein various symbols are made available to the operator of the measuring device and/or monitoring device (2) via a network (9) or via a data carrier, wherein said symbols can be written to the memory unit (3).

7. Apparatus as claimed in Claim 1,
wherein different symbols (15, 14) are permanently written to different memory units (3a, 3b, 3c) and
wherein resources (6) are provided via which the operator of the measuring and/or monitoring device (2) can select at least one desired symbol (15) which is then subsequently displayed on a selected program page (12).

8. Apparatus as claimed in one or more of the previous claims, wherein the at least one memory unit (3) is assigned to either the measuring and/or monitoring device (2) or to the display, input and/or output unit (4, 5).

9. Apparatus as claimed in Claim 1 or 7,
wherein the display/input/output unit (4, 5) is a PC, a laptop, a PDA, an input keyboard and/or a display.

10. Apparatus as claimed in Claim 1,
wherein the display/input/output unit (4, 5) is either an integral unit or an individual unit.

11. Apparatus as claimed in Claim 1,
wherein the company-specific, apparatus-specific and/or process-specific information (13) is an acoustic sound sequence with at least one sound or an audio recording.

## Revendications

1. Dispositif destiné à la mesure et/ou la surveillance d'une grandeur process physique ou chimique avec un appareil de mesure et/ou de surveillance (2), au moins une unité de mémoire (3) et une unité d'affichage (4) et/ou une unité d'entrée et/ou de sortie (5),
pour lequel il s'agit, concernant l'au moins une unité de mémoire (3), d'une mémoire inscriptible non volatile,
pour lequel est enregistrée dans l'au moins une unité de mémoire (3) une information (13) spécifique à l'entreprise, au dispositif et/ou au process,
pour lequel il s'agit, concernant l'information (13) spécifique au dispositif, à l'entreprise ou process, de symboles (15) généralement compréhensibles,
**caractérisé en ce**
**que** sont prévus des moyens, par l'intermédiaire desquels l'exploitant de l'appareil de mesure et/ou de surveillance (2) sélectionne au moins un symbole (15) souhaité, lequel est ensuite affiché sur une page de programme (12) sélectionnée,
en ce que l'information (13) souhaitée peut être appelée par l'intermédiaire de l'unité d'affichage (4) et/ou par l'intermédiaire de l'unité d'entrée / de sortie (5) sur au moins une page de programme (12) et/ou peut être affichée automatiquement, en fonction d'un état défini de l'appareil de mesure et/ou de surveillance (2), sur au moins une page de programme (12) et
en ce que la page de programme (12) est démarrée comme page de démarrage ou d'accueil à la mise en service de l'appareil de mesure et/ou de surveillance (2), et/ou la page de programme (12) affiche, en cas d'apparition d'états d'erreur de l'appareil de mesure et/ou de surveillance (2) ou en cas d'atteinte de valeurs mesurées prédéfinies, l'information (13) souhaitée concernant la grandeur process à mesurer et/ou à surveiller, sur l'unité d'affichage (4) et/ou l'unité d'entrée et/ou de sortie (5).

2. Dispositif selon la revendication 1,
pour lequel il s'agit, concernant l'information spécifique à l'entreprise (13), de logos d'entreprise (14).

3. Dispositif selon la revendication 1,
pour lequel il s'agit, concernant l'information spécifique au process (13), de symboles (15) caractérisant le produit du process, l'état du process et/ou le dispositif de mesure et/ou de surveillance (2).

4. Dispositif selon la revendication 1,
pour lequel est prévue une interface de communication ou de données (11), par l'intermédiaire de laquelle l'unité d'affichage /d'entrée /de sortie (4, 5) communique avec l'appareil de mesure et/ou de surveillance (2).

5. Dispositif selon la revendication 1,
pour lequel est attribuée à l'unité d'affichage, d'entrée et/ou de sortie (4, 5) un programme (7) permettant à un utilisateur l'appareil de mesure et/ou de surveillance (2) de configurer librement un symbole (15) souhaité.

6. Dispositif selon la revendication 1,
pour lequel sont mis à la disposition de l'exploitant de l'appareil de mesure et/ou de surveillance (2), via un réseau (9) ou au moyen d'un support de données, différents symboles pouvant être écrits dans l'unité de mémoire (3).

7. Dispositif selon la revendication 1,
pour lequel différents symboles (15, 14) sont écrits dans différentes unités de mémoire (3a, 3b, 3c) et
pour lequel sont prévus des moyens (6), par l'intermédiaire desquels l'exploitant de l'appareil de mesure et/ou de surveillance (2) peut sélectionner au moins un symbole (15) souhaité, lequel est affiché ensuite sur une page de programme (12) sélectionnée.

8. Dispositif selon l'une ou plusieurs des revendications précédentes, pour lequel l'au moins une unité de mémoire (3) est attribuée soit à l'appareil de mesure et/ou de surveillance (2), soit à l'unité d'affichage, d'entrée et/ou de sortie (4, 5).

9. Dispositif selon la revendication 1 ou 7,
pour lequel il s'agit, concernant l'unité d'affichage / d'entrée / de sortie (4, 5), d'un PC, d'un ordinateur portable, d'un PDA, d'un clavier d'entrée et/ou d'un écran.

10. Dispositif selon la revendication 1,
pour lequel il s'agit, concernant l'unité d'affichage, d'entrée et/ou de sortie (4, 5), soit d'une unité intégrale, soit de composants individuels.

11. Dispositif selon la revendication 1,
pour lequel il s'agit, concernant l'information (13) spécifique à l'entreprise, au dispositif et/ou au process, d'une séquence sonore acoustique avec au moins un son, ou d'un enregistrement audio.
